# EUROPÄISCHE PATENTANMELDUNG

(11) **EP 2 026 434 A1**
(43) Veröffentlichungstag der Anmeldung: **18.02.2009**
(21) Anmeldenummer: 08013921.5
(22) Anmeldetag: 02.08.2008
(51) Int. Cl.: H02G 3/04, H02G 15/113

(54) **Abdichtelement**

(30) Priorität: 12.08.2007 DE 102007037805
(71) Anmelder: gabo Systemtechnik GmbH, 94559 Niederwinkling (DE)
(72) Erfinder: Bauer, Peter, 94357 Konzell (DE); Karl, Markus, 94327 Bogen (DE); Lederer, Roland, 94374 Schwarzach (DE); Geiger, Alexander, 94559 Niederwinkling (DE)

(57) **Zusammenfassung**

Die Erfindung bezieht sich auf ein Abdichtelement oder Stützhülse mit schichtförmigem Aufbau für mit Kabeln belegte Kabelschutzrohre, das als oberste Schicht der Verbindung beispielsweise eine perforierte Folie besitzt, wobei durch die Perforation das darunter befindliche Dichtmittel dringen kann und dabei die Abdichtung zwischen dem Kabelschutzrohr und der Stützhülse übernimmt und gleichzeitig ein Bewegen des Abdichtelementes oder der Stützhülse, beispielsweise zum Einfügen neuer Kabel oder dergl., ermöglicht.

## Beschreibung

Die Erfindung betrifft ein Abdichtelement oder Stützhülse oder Manschette für beispielsweise mit Glasfaserkabeln belegte Kabelschutzrohre mit einem ein oder beidseitig der Stützhülse oder der Manschette aufgetragenen Dichtmittel zwischen dieser und der Oberfläche des Kabelkanalrohres, bzw. dessen Innenrohren.

Abdichtelemente für Kabelkanalrohre sind an sich bekannt, beispielsweise aus der DE 7833835 U1, mit der eine Abdichtung mittels Dichtmasse vorgeschlagen wird, weiter zeigen die DE 0650007 und DE 19849941 Vorschläge, die Abdichtung durch Dichtmatten vorzunehmen, dem Prospekt der Firma Tyco ist eine beidseits mit Kleber beschichtete Manschette zu entnehmen, um eine ausreichende Abdichtung zwischen Kabelkanalrohr und Mantelrohren zu erzielen.

Problematisch bei solchen Einrichtungen gestaltet sich dabei die Entfernung des Adichtelementes für den Austausch, bzw. die Einfügung weiterer Kabel. Werden die Stützhülsen, bzw. Adichtelemente mit den Kabelkanalrohren gem. der DE 7833835 verklebt, ist ein späterer Austausch, oder ein späteres Einfügen von weitern, Glasfaserkabeln oder dergl. nicht mehr, oder nur äußerst umständlich möglich. Werden statt dessen Manschetten ohne Stützhülsen zur Abdichtung eingesetzt, entsteht durch das Aufblasen der Manschetten ein recht hoher Normaldruck auf die im Inneren verlegten dünnwandigen Mantelrohre, bzw. -schläuche mit den Glasfaserkabeln, was diese u.U. zum Einknicken bringt, wodurch die dünnen Glasfaserkabelröhrchen und/oder die sich darin befindenden Glasfasern selbst beschädigt werden können. Die Verwendung von Dichtmatten mit hoher Viskosität birgt den Nachteil in sich, bei kleinen Rohrdurchmessern geringe Beschädigungen oder Rillen in der Rohrwand nicht abzudichten.

Der Erfindung, wie sie in den Ansprüchen beschrieben ist, liegt daher die Aufgabe zugrunde, die Abdichtungsprobleme zu lösen und, vor allem, diese den neuen Technologien der Verlegetechnik anzupassen.

Die mit der Erfindung vorgeschlagene Abdichtmethode löst das anstehende Problem beim Einsatz in beispielsweise mit Glasfaserkabeln belegte Kabelkanalrohre auf einfache Weise. Der damit verbundene Vorteil liegt insbesondere darin, dass der Austausch oder eine Neubelegung der Kabelkanalrohre mit Glasfaserkabel ohne Aufwand ermöglicht ist und weiterhin darin dass die Abdichtung, selbst von Rillen etc. in der Rohrwand einwandfrei funktioniert. Außerdem wird das Eindrücken der dünnwandigen Mantelrohre im Inneren des Kabelkanalrohres mit Sicherheit vermieden.

Die Erfindung ist nachstehend anhand eines in den Abbildungen dargestellten Ausführungsbeispieles näher erläutert.

Es zeigt:
- Fig. 1:: ein Abdichtelement,
- Fig. 2:: eine Ausführungsvariante der Fig. 1
- Fig. 3:: eine Ausführungsvariante der Fig. 1 und 2
- Fig. 4:: ein mit Kabeln belegtes Kabelschutzrohr

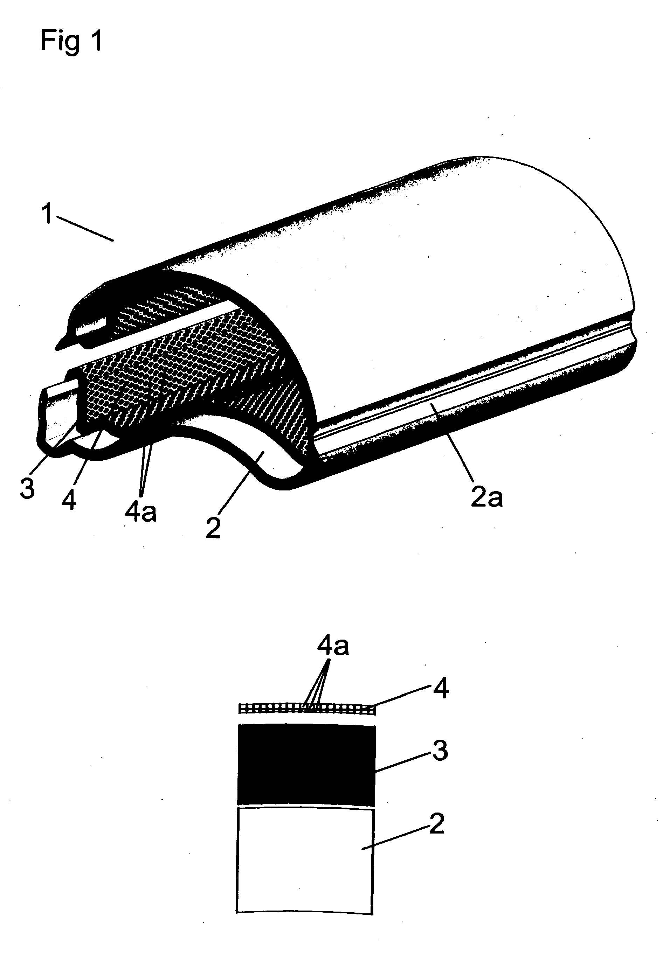

Wie aus der Fig. 1 hervor geht besteht das Abdichtelement 1, bzw. die Dichthülse 2 im Wesentlichen aus einem geteilten oder mit einem Folienscharnier ausgerüsteten rohrförmigen Körper A, der gegenüber dem dieses Abdichtelement umhüllenden Kabelkanalrohr K einerseits und den sich im Inneren des, meist dünnwandigen, Mantelrohres M befindenden Schutzröhrchen mit den Glasfaserkabeln andererseits abgedichtet ist und zwar mittels eines schichtförmig aufgebauten Dichtmasse D.

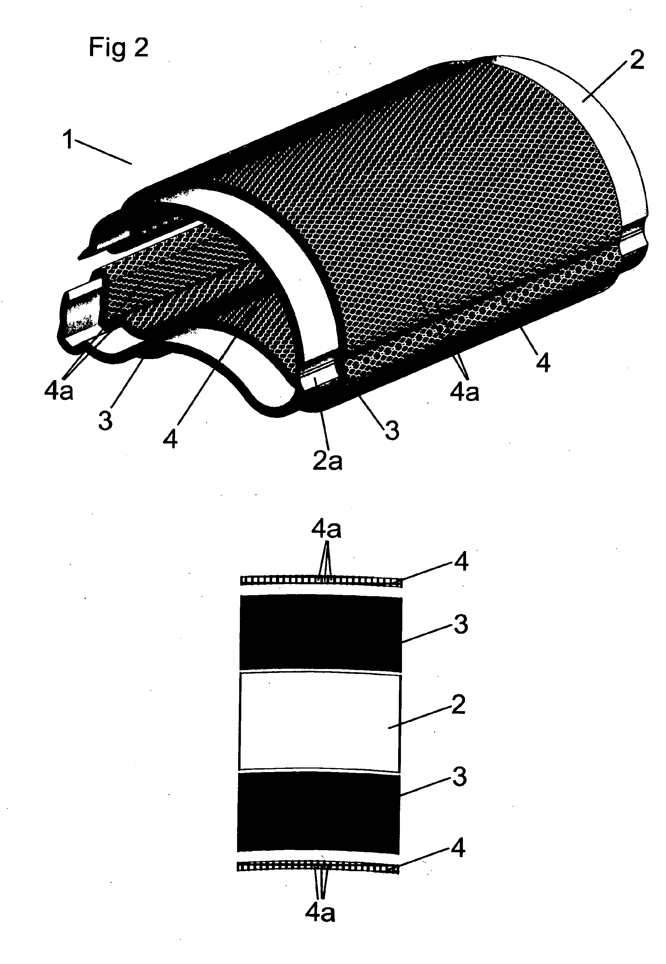

Die Fig. 2 zeigt deutlich den schichtförmigen Aufbau der Dichtmasse D, die beidseitig der Rohrwand des Abdichtelementes 1, bzw. der aufblasbaren Manschette oder der Stützhülse 2 aus je einer Schicht Dichtmittel 3 und der darauf angebrachten Kontaktschicht 4 besteht. Dieser Aufbau ist sowohl nach Innen, also zu Außenwand des Mantelrohres M hin, als auch nach Außen zur Innenwand des Kabelkanalrohrs K abdichtend ausgebildet. Eine Variante dieser Ausführungsform zeigt die

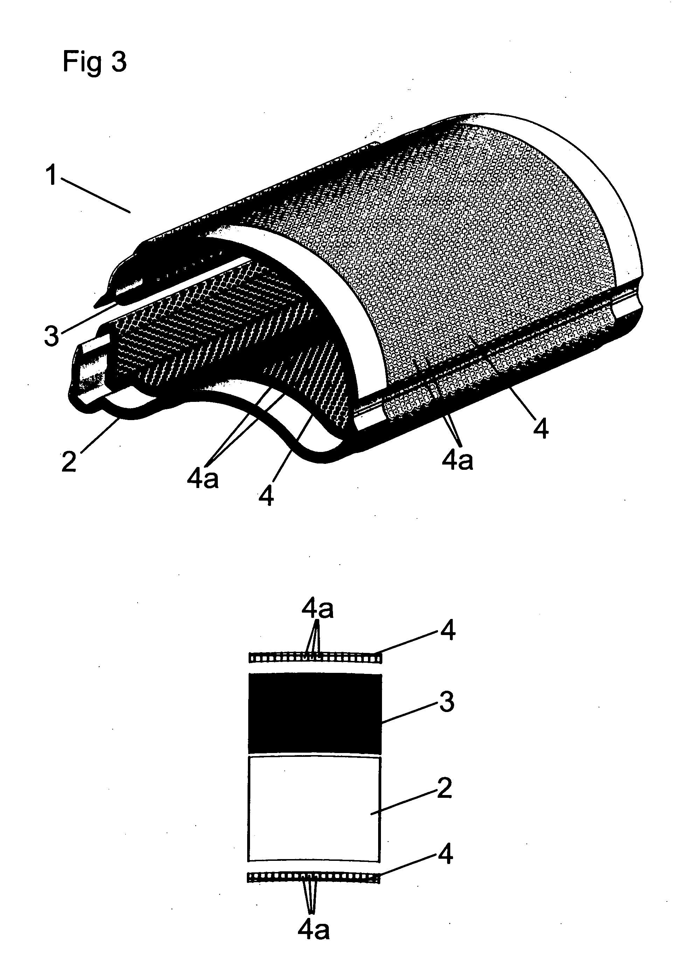

Fig. 3. Der hier dargestellte Aufbau des Dichtmittels D ist derart, dass auf der Außenseite der Dichthülse 2 eine Kontaktschicht 4 vorgesehen ist, während auf deren Innenseite zunächst das Dichtmittel 3 und darauf eine Kontaktschicht 4 vorgesehen sind.

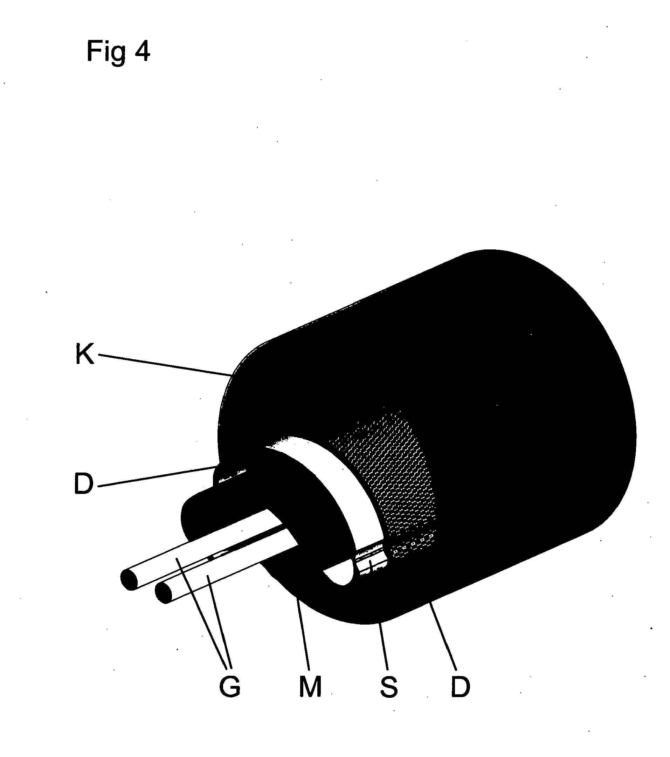

Die Fig. 4 zeigt eine Übersichtsdarstellung des Abdichtelementes 1 mit einem Kabelkanalrohr K, einer Stützhülse S, dem Dichtmittel D und den in einem Mantelrohr M enthaltenen Glasfaserkabeln G.

Bei sämtlichen Ausführungsvarianten ist ohne Belang, ob es sich dabei um eine Stützhülse, eine aufblasbare Manschette, ein sonstiges Abdichtelement oder dergl. handelt.

Die Kontaktschicht 4 kann vorzugsweise als eine Kunststofffolie ausgebildet sein die so perforiert ist, beispielsweise durch Schlitze, Löcher oder dergl., dass eine Teilmenge des darunter befindlichen Dichtmittels 3 hindurch treten kann und so die Abdichtungsfunktion übernimmt,

Weitere Ausführungsvarianten sehen ein Umbördeln mindestens der Kontaktschicht 4 an den Berührungsflächen der Stützhülse 2 vor, um eine ausreichende Dichtwirkung zu gewährleisten. Somit können sämtliche evtl. auftretenden Dichtprobleme im Zusammenhang mit Verlegung von Glasfaserkabeln G in Kabelkanalrohren K gelöst werden. Das Entnehmen bzw. der Neueinzug von Glasfaserkabeln G in die Stützhülse 2 geht dabei leicht von statten.

Das als Stützhülse 2 ausgebildete Abdichtelement kann beispielsweise mit einem Filmscharnier 2a versehen sein oder auch aus zwei Halbschalen bestehen.

### Bezugszeichenliste

Fig. 1 - 3
   - 1: Abdichtelement
   - 2: Stützhülse
   - 2a: Filmscharnier
   - 3: Dichtmittel
   - 4: Kontaktschicht
   - 4a: Perforation
Fig. 4
   - D: Dichtmittel
   - G: Glasfaserkabel
   - M: Mantelrohr
   - K: Kabelkanalrohr
   - S: Stützhülse

## Patentansprüche

1. Abdichtelement oder Stützhülse für beispielsweise mit Glasfaserkabeln belegte Kabelschutzrohre mit einem ein- oder beidseitig auf der Stützhülse aufgetragenen Dichtmittel zwischen dieser und der Oberfläche des Kabelkanalrohres, bzw. den inneren Mantelrohren, **dadurch gekennzeichnet, dass** ein schichtartiger Aufbau der dichtaktiven Werkstoffe vorgesehen ist, wobei auf der inneren und/oder äußeren Oberfläche der Stützhülse oder Manschette (2) ein Dichtmittel (3) und darauf, gegenüber der/den abzudichtenden Flächen eine perforierte Kontaktschicht (4) vorgesehen ist, ein geringer Anteil der Dichtmittel (4) durch die Perforation (4a) der Kontaktschicht (4) dringt und die Abdichtung übernimmt.

2. Abdichtelement nach Anspruch 1, **dadurch gekennzeichnet, dass** die perforierte Kontaktschicht (4) aus einer Kunststofffolie besteht.

3. Abdichtelement nach Anspruch 1 und 2, **dadurch gekennzeichnet, dass** das Dichtmittel (3) aus Mastix besteht.

4. Abdichtelement nach Anspruch 1 bis 3, **gekennzeichnet durch** einen Schichtaufbau: a) Kontaktschicht (4) - Dichtmittel (3) - Stützhülse, bzw. Manschette (2) - Kontaktschicht (4), oder b) Kontaktschicht (4) - Dichtmittel (3) - Stützhülse (2), oder c) Kontaktschicht (4) - Dichtmittel (3) - Stützhülse, bzw. Manschette (2) - Dichtmittel (3) - Kontaktschicht (4).

5. Abdichtelement nach Anspruch 1 bis 4, **dadurch gekennzeichnet, dass** mindestens die Kontaktschicht (4) an den sich gegenüberliegenden Berührungsflächen (B) der mit einem Scharnier ausgerüsteten Stützhülse (2) umgebördelt ist.

6. Abdichtelement nach Anspruch 1, **dadurch gekennzeichnet, dass** zwischen dem inneren Mantelrohr (M) und dem Kabelkanalrohr (K) eine mindestens einseitig beschichtete aufblasbare Manschette (M) vorgesehen ist.

7. Abdichtelement nach Anspruch 1 bis 5, **dadurch gekennzeichnet, dass** die Kontaktschicht (4) die Dichtmittel (3) überlappt.
